# DEMANDE DE BREVET EUROPEEN

(11) **EP 0 545 469 A1**
(43) Date de publication de la demande: **09.06.1993**
(21) Numéro de dépôt: 92203634.8
(22) Date de dépôt: 25.11.1992
(51) Int. Cl.: F16L 19/02

(54) **Procédé et dispositif de fixation libérable d'un embout mâle dans un élément femelle correspondant**

(30) Priorité: 04.12.1991 BE 9101110
(71) Demandeur: Weinberg, Pierre André, B-1080 Bruxelles (BE)
(72) Inventeur: Weinberg, Pierre André, B-1080 Bruxelles (BE)
(74) Mandataire: Claeys, Pierre

(57) **Abrégé**

Procédé et dispositif de fixation libérable d'un embout mâle (3) dans un élément femelle (4) correspondant, en particulier dans un dispositif de raccordement démontable pour flexible de circulation de fluide sous pression, comprenant une solidarisation, autour de l'embout mâle (3) enfoncé, de l'élément femelle (4) et d'une bague (8) sensiblement coaxiale à l'embout (3), une déformation élastique d'un anneau (17) logé entre l'élément (4) et la bague (8), une pénétration partielle de l'anneau (17) dans une rainure (15) correspondante de l'embout (3), et une retenue de l'embout (3) dans l'élément (4) par l'anneau (17) situé dans la rainure (15) et arrêté par la bague (8) solidarisée avec l'élément (4), l'enfoncement ayant lieu sensiblement librement au travers de l'anneau (17) jusqu'à fond de course et en outre, au moins à la fin de la solidarisation, un pressage de l'anneau (17) entraînant sa déformation élastique et sa pénétration à l'état élastiquement déformé dans la rainure (15).

## Description

L'invention concerne un procédé de fixation libérable d'un embout mâle dans un élément femelle correspondant, en particulier dans un dispositif de raccordement démontable pour flexible de circulation de fluide sous pression, comprenant :
- une solidarisation, autour de l'embout mâle enfoncé, de l'élément femelle et d'une bague sensiblement coaxiale à l'embout mâle,
- une déformation élastique d'un anneau logé entre l'élément femelle et la bague,
- une pénétration partielle de l'anneau dans une rainure correspondante de l'embout mâle, et
- une retenue de l'embout mâle dans l'élément femelle par l'anneau situé dans la rainure et arrêté par la bague solidarisée avec l'élément femelle.

On connaît un procédé de fixation du genre décrit ci-dessus, dans lequel, lors de l'enfoncement de l'embout mâle, il faut déformer l'anneau élastique en le forçant le long de l'embout sur une partie tronconique. Le diamètre de celle-ci s'accroît jusqu'à la rainure dans laquelle l'anneau élastique peut se loger en retrouvant sa forme de départ.

Ce procédé connu présente divers inconvénients et notamment, dans la position enfoncée et par la suite, l'anneau élastique logé dans la rainure ne peut plus être sorti de cette dernière et la bague et l'anneau sont ainsi pratiquement définitivement fixés à demeure sur l'embout. Il en résulte que quand il faut libérer l'embout mâle de l'élément femelle, il faut désolidariser complètement, par exemple par dévissage, la bague et l'élément femelle et cela entraîne une perte de temps. De plus, si un autre embout mâle doit être fixé au même élément femelle, cet autre embout mâle doit être aussi équipé d'une autre bague et d'un autre anneau élastique qui y seront aussi fixés définitivement et cela entraîne des coûts inutiles de pièces immobilisées. En outre, pour enfoncer l'embout mâle dans l'élément femelle, il faut vaincre la force élastique de l'anneau élastique glissant le long de la partie tronconique. Si, pour une raison quelconque (manque de force, distraction...), l'anneau élastique ne parvient pas dans la rainure, malgré un serrage de solidarisation énergique de la bague sur l'élément femelle, l'embout mâle est expulsé de ce dernier dès une mise en pression du fluide dans le circuit dont ces élément et embout font partie. Des dommages corporels et matériels considérables peuvent résulter de cette expulsion, sans compter le temps perdu à rétablir la situation.

L'invention a pour but de remédier à ces inconvénients et de procurer un procédé qui permette entre autres d'enfoncer aisément et avec certitude à fond de course l'embout mâle dans l'élément femelle. Suivant l'invention, le procédé permet aussi de libérer l'embout uniquement par un dévissage partiel sans outil en désolidarisant partiellement la bague de l'élément femelle, les mêmes bague et anneau restant unis à l'élément femelle pour la fixation éventuelle d'un autre embout mâle. Ainsi aussi, il n'y a pratiquement pas de risque d'endommager la bague comme cela arrive lorsqu'elle reste au bout d'un flexible sur l'embout mâle.

A cet effet, suivant l'invention, dans le procédé tel que décrit au début, l'enfoncement a lieu sensiblement librement au travers de l'anneau jusqu'à fond de course et on réalise en outre, au moins à la fin de la solidarisation, un pressage de l'anneau entraînant sa déformation élastique et sa pénétration à l'état élastiquement déformé dans la rainure.

Suivant un mode avantageux de l'invention, le procédé pour une libération de l'embout mâle comprend :
- une désolidarisation entre la bague et l'élément femelle permettant une suppression dudit pressage
- une libération de l'anneau avec un retour de celui-ci sensiblement à sa forme d'avant la déformation élastique susdite, et
- un retrait de l'embout mâle hors de l'élément femelle.

Suivant un mode particulièrement avantageux de l'invention, le procédé comporte, au moins à la fin de la solidarisation, un pressage dans la rainure en sens radial, par la bague, de l'anneau axialement en appui sur l'élément femelle.

L'invention concerne également un dispositif de fixation libérable d'un embout mâle dans un élément femelle correspondant, en particulier dans un dispositif de raccordement démontable pour flexible de circulation de fluide sous pression, comprenant :
- une partie de raccordement de l'élément femelle pour y enfoncer coaxialement une partie correspondante de l'embout mâle, pour la fixation susdite et pour la circulation du fluide entre l'élément femelle et l'embout mâle,
- un anneau élastique disposé coaxialement contre une face libre de la partie de raccordement, la partie correspondante de l'embout mâle étant enfoncée sensiblement au milieu de cette face libre, et
- une bague disposée coaxialement à la partie de raccordement, autour de l'embout mâle, et capable d'être solidarisée avec l'élément femelle, la bague comportant une face d'appui pour l'anneau élastique, située à l'opposé de ladite face libre par rapport à l'anneau élastique lorsque la bague et l'élément femelle sont solidarisés,
- une rainure externe sur l'embout mâle, entre la partie correspondante à enfoncer dans l'élément femelle et située à une extrémité de l'embout mâle et une partie d'extrémité de ce dernier destinée au flexible, la rainure externe étant prévue pour recevoir l'anneau élastique lorsque l'embout mâle est en position enfoncée et lorsque la bague est solidarisée sur l'élément femelle.

Pour pouvoir enfoncer librement l'embout mâle dans l'élément femelle et pour ensuite les fixer, il est prévu suivant l'invention que :
- la partie correspondante de l'embout mâle, au moins au voisinage de la rainure externe, a un diamètre sensiblement égal ou inférieur au diamètre interne de l'anneau élastique, et
- le dispositif comporte des moyens de pressage pour l'introduction partielle de l'anneau élastique, dans un état élastiquement déformé, a l'intérieur de la rainure externe lors de la solidarisation de la bague et de l'élément femelle, l'anneau élastique étant maintenu entre ladite face d'appui et la face libre précitée.

D'autres détails et particularités de l'invention ressortiront de la description des dessins qui sont annexés au présent mémoire et qui illustrent, à titre d'exemple non limitatif, le procédé et une forme de réalisation particulière du dispositif suivant l'invention.

La figure 1 est une vue éclatée avec coupe partielle d'une forme de réalisation particulière du dispositif suivant l'invention.

La figure 2 est une vue avec coupe partielle du dispositif de la figure 1 assemblé et fixé.

Dans les différentes figures, les mêmes notations de référence désignent des éléments identiques ou analogues.

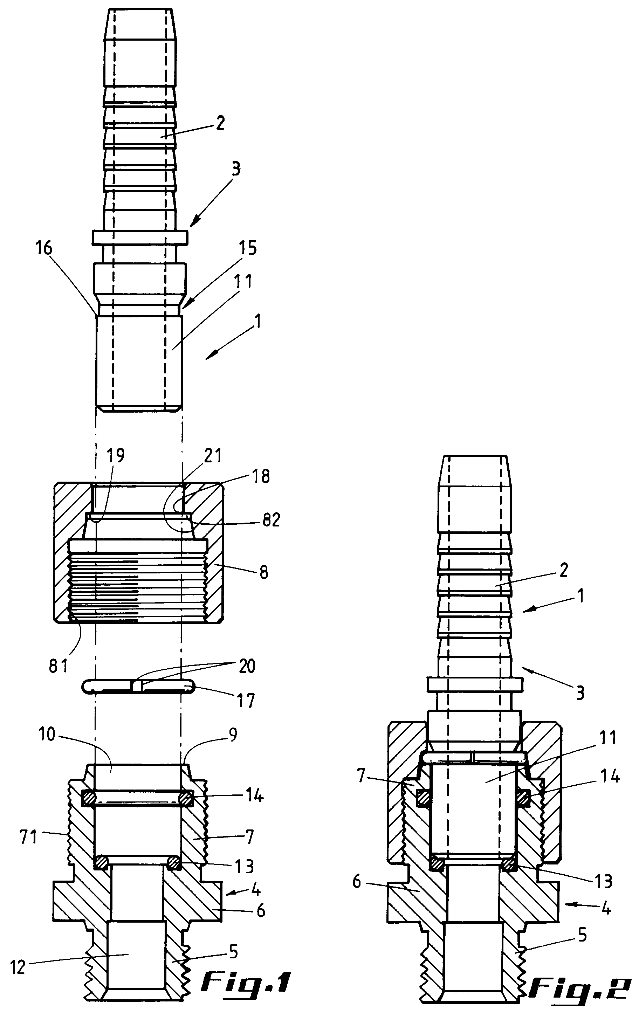

Les figures 1 et 2 montrent à titre d'exemple un raccord, désigné dans son ensemble par la référence 1, qui est destiné à connecter de façon démontable un flexible connu en soi d'un circuit sous pression (non représenté) à un élément de machine (non représenté), et qui comporte un dispositif de fixation suivant l'invention.

Le flexible est fixé, de façon connue par l'homme du métier, sur la partie cannelée 2 d'un embout mâle 3 à fixer dans un élément femelle 4. Ce dernier présente ici la forme d'un corps 4 avec une extrémité filetée extérieurement 5 pour son raccordement à l'élément de machine, une partie 6 de contour hexagonal pour recevoir une clef lors du vissage du corps 4 dans l'élément de machine ou lors d'un démontage, et une partie de raccordement 7 pour l'embout mâle 3 susdit.

Les matières utilisées pour le corps 4, l'embout mâle 3 et autres éléments constitutifs du raccord 1 sont adaptées aux fluides gazeux ou liquides véhiculés par ceux-ci et à l'ambiance dans laquelle ils sont utilisés.

Dans l'exemple de réalisation décrit, la partie de raccordement 7 est filetée à l'extérieur en 71 pour recevoir par vissage de solidarisation une bague 8 à filet interne 81 correspondant. La partie de raccordement 7 est terminée par une face libre 9 avantageusement perpendiculaire à l'axe longitudinal de l'élément femelle 4. Cette face libre 9 comporte en son milieu un perçage 10 suivant l'axe longitudinal susdit et destiné à recevoir de façon connue une partie correspondante 11 de l'embout mâle 3, située à l'opposé de la partie cannelée 2 de ce dernier. Dans ce perçage 10, qui est en communication par un conduit 12 avec le circuit à fluide de l'élément de machine (non représenté), deux joints toriques 13 et 14 sont disposés de façon connue pour réaliser une étanchéité déterminée entre la partie correspondante d'embout 11 et le perçage 10, par exemple en fonction de la pression dans le flexible et le circuit correspondants.

L'embout mâle 3, percé de part en part suivant son axe longitudinal pour la circulation du fluide, présente une rainure annulaire 15 perpendiculaire à cet axe longitudinal. La rainure annulaire 15 est agencée pour que, lorsque la partie correspondante 11 est enfoncée à fond dans le perçage 10 contre le joint torique 13, une face radiale 16 de la rainure annulaire 15, à la frontière de celle-ci et de la partie correspondante 11, soit sensiblement dans le même plan que la face libre 9.

Pour la fixation de l'embout mâle 3 dans le corps 4 suivant l'exemple décrit, un anneau élastique 17 est coincé a l'état monté du raccord 1, par un vissage de la bague 8 sur la partie de raccordement 7, entre la face libre 9 de cette partie et un rebord interne 18 de la bague 8 opposé à la face libre 9 par rapport à l'anneau élastique 17 et formant alors une face d'appui 19 avantageusement en partie parallèle en 82 à la face libre 9. Le rebord interne 18 est situé sur la bague 8 de préférence à l'extrémité opposée à celle munie du filet interne 81.

La largeur de la rainure annulaire 15 est adaptée à l'épaisseur de l'anneau élastique 17 pour que ce dernier puisse y être au moins partiellement logé. Ainsi, lorsque l'embout mâle 3 est enfoncé à bloc dans l'élément femelle 4 et que la bague 8 est vissée sur ce dernier, l'anneau élastique 17, bloqué entre la face libre 9 et la face d'appui 19 et introduit partiellement dans la rainure annulaire 15, empêche par la face radiale 16 de cette dernière un retrait de l'embout mâle 3.

Suivant l'invention, pour permettre une introduction aisée et sûre de la partie correspondante 11 de l'embout mâle 3 au travers de l'anneau élastique 17, pour amener celui-ci en face de la rainure 15, le diamètre interne de cet anneau 17 à l'état de repos est supérieur au diamètre de la partie correspondante 11 qui est en outre avantageusement cylindrique.

Suivant l'invention, il est avantageux de pouvoir déformer élastiquement l'anneau élastique 17 pour l'introduire radialement dans la rainure annulaire 15. A cet effet, l'anneau élastique 17, par exemple en acier à ressort et de forme torique, est de préférence fendu suivant deux méridiens 20 du tore. Une distance mutuelle des deux méridiens peut être choisie entre autres, en fonction de la limite élastique de l'acier à ressort, pour empêcher de dépasser celle-ci lors d'un pressage radial de l'anneau élastique pour mettre en contact les surfaces déterminées par ces méridiens 20.

Pour que l'anneau élastique 17 soit logé partiellement dans la rainure annulaire 15 à l'état complètement monté du raccord 1, suivant l'invention il est avantageusement prévu dans l'exemple décrit que la face libre 9 et la face d'appui 19 constituent des moyens de pressage et de maintien de l'anneau élastique 17 dans ladite rainure annulaire 15. A cet effet, de préférence la face libre 9 est plane et forme un soutien pour l'anneau élastique. La face d'appui 19 comporte alors une partie de surface tronconique interne 21 qui est de préférence coaxiale à la bague 8 et au filet interne 81 et dont la pente est choisie pour que cette surface tronconique 21 corresponde, du côté du filet interne 81, au diamètre externe de l'anneau élastique 17 au repos et, du côté du rebord interne 18, au diamètre externe de l'anneau élastique 17 introduit partiellement dans la rainure annulaire 15 pour le blocage de l'embout mâle 3.

Il peut être avantageux, par exemple pour la réalisation de la surface tronconique interne 21, de prévoir entre celle-ci et la partie dite parallèle en 82 une portion cylindrique (figure 1) de même diamètre que l'extrémité de la surface tronconique interne 21 du côté du rebord 18. Alors pour le maintien de l'anneau élastique 17 dans la rainure 15, des forces purement radiales sont exercées par la bague 8 sur cet anneau 17.

Le procédé de fixation de l'embout mâle 3 dans l'élément femelle 4 peut comporter, par exemple lors d'un premier montage du raccord 1 comprenant ces éléments, les étapes suivantes.

On fixe l'embout mâle 3 par sa partie cannelée 2 à un flexible correspondant. On visse aussi l'élément femelle 4 par exemple dans une partie de machine à laquelle doit être raccordé le flexible. Bien sûr, le raccord 1 a été sélectionné, en fonction des impératifs connus de l'homme du métier, pour l'application concernée. Le cas échéant, on dispose sur la face libre 9 l'anneau élastique 17 et l'on visse, pour leur solidarisation mutuelle, la bague 8 sur la partie de raccordement 7, en arrêtant ce vissage peu avant que la surface tronconique 21 ne prenne appui sur l'anneau élastique 17.

Dans cet état, suivant l'invention, on peut enfoncer à fond la partie correspondante 11 de l'embout mâle 3 dans le perçage 10 de la partie de raccordement 7, sensiblement coaxialement au travers de la bague 8 et de l'anneau élastique 17, en n'ayant pratiquement à vaincre que la résistance de frottement entre partie correspondante 11 et joint torique 14. Jusqu'à ce point, l'anneau élastique 17 est libre autour de l'embout mâle 3 et en fin d'enfoncement il est en regard de la rainure annulaire 15.

En vissant ensuite la bague 8 sur la partie de raccordement 7, la surface tronconique interne 21 prend appui sur la surface externe de l'anneau élastique 17 et le presse contre la face libre 9. La surface tronconique interne 21 s'approchant continûment de la face libre 9 exerce sur l'extérieur de l'anneau élastique 17 fendu des forces dont les composantes radiales, par réaction de la face libre 9, provoquent la fermeture au moins partielle de l'anneau élastique à l'endroit entre les deux surfaces de méridiens 20. Simultanément, l'anneau élastique 17 pénêtre partiellement dans la rainure annulaire 15 au point de former un arrêt pour la face radiale 16 et, retenu en outre par le rebord interne 18, il empêche un retrait de l'embout mâle 3 ou une expulsion de ce dernier lorsque le flexible et le circuit qui le comporte sont sous pression.

La surface tronconique interne 21 ne déforme qu'élastiquement l'anneau 17. Pour libérer l'embout mâle 3 fixé dans l'élément femelle 4, il suffit de dévisser partiellement la bague 8, jusqu'a ce que la surface tronconique interne 21 libère l'anneau élastique 17, pour que celui-ci quitte la rainure annulaire 15 et ne retienne plus l'embout mâle 3 par la face radiale 16. Un retrait de l'embout mâle 3 est alors possible en n'ayant pratiquement à vaincre que le frottement précité entre partie correspondante 11 et joint torique 14.

Par la disposition calculée du joint torique 13 au fond du perçage 10, lors du vissage susdit, la prise de contact progressive de l'anneau élastique 17 et de la face radiale 16 ainsi que la descente de la bague 8 le long de la partie de raccordement 7 mettent correctement en appui l'extrémité correspondante de l'embout 3 et le joint torique 13 pour assurer une étanchéité voulue à la pression du circuit susdit.

Il doit être entendu que l'invention n'est nullement limitée aux formes de réalisation décrites et que bien des modifications peuvent être apportées à ces dernières sans sortir du cadre de la présente invention.

Ainsi, au lieu d'un vissage, la solidarisation entre bague 8 et élément femelle 4 peut être réalisée par un système à baïonnette connu en soi mais adapté par exemple pour un déplacement progressif en fin de solidarisation lorsque la partie tronconique 21 déforme élastiquement l'anneau 17.

L'anneau élastique 17 peut être de forme et de matière différentes et consister par exemple en une rondelle bombée avec bord externe continu et fentes radiales débouchant dans le perçage central. Par compression de la rondelle entre des faces d'appui 19 et face libre 9 planes, des saillies formées entre les fentes pénêtrent dans la rainure 15 pour retenir l'embout 3 par la face radiale 16.

On appréciera que pour visser et dévisser la bague 8, aucun outil n'est nécessaire parce que l'effort demandé pour presser l'anneau 17 dans la rainure 15 est pratiquement uniquement tributaire de l'élasticité de l'anneau 17 et celle-ci peut être choisie à cet effet.

On appréciera aussi que lors d'un retrait de l'embout 3, la bague 8 et l'anneau 17 peuvent rester sur le filetage externe en 71 et cela protège tant la bague 8 que ce filetage externe.

L'embout 3 peut avoir toutes les formes usuelles du côté dit destiné à recevoir un flexible, au-delà de la rainure 15 à partir de la partie correspondante 11, vers et y compris sur la partie dite cannelée 2. De même, l'élément femelle 4 peut être de formes différentes, appropriées à des applications spécifiques, entre autres à l'endroit de l'extrémité filetée 5.

La rainure 15 peut ne pas s'étendre sur toute la périphérie de l'embout mâle 3.

L'embout mâle 3 peut être fixé à la partie de machine et l'élément femelle 4 au flexible, etc.

## Revendications

1. Procédé de fixation libérable d'un embout mâle (3) dans un élément femelle (4) correspondant, en particulier dans un dispositif de raccordement démontable pour flexible de circulation de fluide sous pression, comprenant :
- une solidarisation, autour de l'embout mâle (3) enfoncé, de l'élément femelle (4) et d'une bague (8) sensiblement coaxiale à l'embout mâle (3),
- une déformation élastique d'un anneau (17) logé entre l'élément femelle (4) et la bague (8),
- une pénétration partielle de l'anneau (17) dans une rainure (15) correspondante de l'embout mâle (3), et
- une retenue de l'embout mâle (3) dans l'élément femelle (4) par l'anneau (17) situé dans la rainure (15) et arrêté par la bague (8) solidarisée avec l'élément femelle (4),
caractérisé en ce que l'enfoncement a lieu sensiblement librement au travers de l'anneau (17) jusqu'à fond de course et en ce qu'on réalise en outre, au moins à la fin de la solidarisation, un pressage de l'anneau (17) entraînant sa déformation élastique et sa pénétration à l'état élastiquement déformé dans la rainure (15).

2. Procédé suivant la revendication 1, caractérisé en ce qu'il comprend, pour une libération de l'embout male (3) :
- une désolidarisation entre la bague (8) et l'élément femelle (4) permettant une suppression dudit pressage, et
- une libération de l'anneau (17) avec un retour de celui-ci sensiblement à sa forme d'avant la déformation élastique susdite, et
- un retrait de l'embout mâle (3) hors de l'élément femelle (4).

3. Procédé suivant l'une ou l'autre des revendications 1 et 2, caractérisé en ce que la solidarisation comporte un vissage de la bague (8) sur l'élément femelle (4).

4. Procédé suivant l'une quelconque des revendications 1 à 3, caractérisé en ce qu'il comporte au moins à la fin de la solidarisation, un pressage dans la rainure (15) en sens radial par la bague (8) de l'anneau (17) axialement en appui sur l'élément femelle (4).

5. Dispositif de fixation libérable d'un embout mâle (3) dans un élément femelle (4) correspondant, en particulier dans un dispositif de raccordement démontable pour flexible de circulation de fluide sous pression, comprenant :
- une partie de raccordement (7) de l'élément femelle (4) pour y enfoncer coaxialement une partie correspondante (11) de l'embout mâle (3), pour la fixation susdite et pour la circulation du fluide entre l'élément femelle (4) et l'embout mâle (3),
- un anneau élastique (17) disposé coaxialement contre une face libre (9) de la partie de raccordement (7), la partie correspondante (11) de l'embout mâle (3) étant enfoncée sensiblement au milieu de cette face libre (9), et
- une bague (8) disposée coaxialement à la partie de raccordement (7), autour de l'embout mâle (3), et capable d'être solidarisée avec l'élément femelle (4), la bague (8) comportant une face d'appui (19) pour l'anneau élastique (17), située à l'opposé de ladite face libre (9) par rapport à l'anneau élastique (17) lorsque la bague (8) et l'élément femelle (4) sont solidarisés,
- une rainure externe (15) sur l'embout mâle (3), entre la partie correspondante (11) à enfoncer dans l'élément femelle (4) et située à une extrémité de l'embout mâle (3) et une partie d'extrémité (2) de ce dernier destinée au flexible, la rainure externe (15) étant prévue pour recevoir l'anneau élastique (17) lorsque l'embout mâle (3) est en position enfoncée et lorsque la bague (8) est solidarisée sur l'élément femelle (4),
caractérisé en ce que :
- la partie correspondante (11) de l'embout mâle (3), au moins au voisinage de la rainure externe (15), a une diamètre sensiblement égal ou inférieur au diamètre interne de l'anneau élastique (17), et
- le dispositif comporte des moyens de pressage pour l'introduction partielle de l'anneau élastique (17) dans un état élastiquement déformé à l'intérieur de la rainure externe (15) lors de la solidarisation de la bague (8) et de l'élément femelle (4), l'anneau élastique (17) étant maintenu entre ladite face d'appui (19) et la face libre (9) précitée.

6. Dispositif suivant la revendication 5, caractérisé en ce que les moyens de pressage sont constitués en outre par la face libre (9) de l'élément femelle (4) et la face d'appui (19) de la bague (8).

7. Dispositif suivant la revendication 6, caractérisé en ce qu'une des deux faces dites d'appui (19) et libre (9) est sensiblement plane et perpendiculaire à l'embout mâle (3) enfoncé, l'autre face étant une surface tronconique interne (21), orientée sensiblement radialement vers l'intérieur et vers ladite une des deux faces, pour le pressage élastique dans la rainure externe (15) de l'anneau élastique (17) en contact avec ladite une des deux faces.

8. Dispositif suivant la revendication 7, caractérisé en ce que la surface tronconique (21) est formée sur la face d'appui (19).

9. Dispositif suivant l'une quelconque des revendications 5 à 8, caractérisé en ce que l'anneau élastique (17) est fendu.

10. Dispositif suivant l'une quelconque des revendications 5 à 9, caractérisé en ce que pour leur solidarisation mutuelle, la bague (8) et l'élément femelle (4) comportent chacun un filet correspondant, (81 et respectivement 71) la bague (8) ayant de préférence un filet interne.
